# EUROPÄISCHE PATENTANMELDUNG

(11) **EP 3 673 724 A1**
(43) Veröffentlichungstag der Anmeldung: **01.07.2020**
(21) Anmeldenummer: 19204456.8
(22) Anmeldetag: 22.10.2019
(51) Int. Cl.: A01D 57/20, B65G 15/36, A01D 61/00, A01D 61/02, B65G 15/42

(54) **ZUGMITTEL, VORZUGSWEISE RIEMEN, FÜR EINEN SCHRÄGFÖRDERER EINES MÄHDRESCHERS**

(30) Priorität: 20.12.2018 DE 102018222481
(71) Anmelder: ContiTech Antriebssysteme GmbH, 30165 Hannover (DE)
(72) Erfinder: Schwefe, Thorsten - c/o Continental AG, 30419 Hannover (DE); Quass, Jan-Henning - c/o Continental AG, 30419 Hannover (DE); Lorenz, Eduard - c/o Continental AG, 30419 Hannover (DE); Kucharczyk, Andre - c/o Continental AG, 30419 Hannover (DE)
(74) Vertreter: Finger, Karsten

(57) **Zusammenfassung**

Die vorliegende Erfindung betrifft ein Zugmittel (2), vorzugsweise einen Riemen (2), für einen Schrägförderer (12) eines Mähdreschers (1), mit einem Zugmittelkörper (20), welcher sich im Wesentlichen in der Längsrichtung (X) des Riemens (2) erstreckt sowie endlos geschlossen ist oder endlos schließbar ausgebildet ist. Das Zugmittel (2) ist dadurch gekennzeichnet, dass in den Zugmittelkörper (20) wenigstens ein Zugstrang (22) eingebettet ist, welches in der Längsrichtung (X) verläuft und vom Zugmittelkörper (20) umschlossen wird.

## Beschreibung

Die vorliegende Erfindung betrifft ein Zugmittel, vorzugsweise einen Riemen, für einen Schrägförderer eines Mähdreschers gemäß dem Oberbegriff des Patentanspruchs 1, einen Schrägförderer für einen Mähdrescher mit einem derartigen Zugmittel gemäß dem Patentanspruch 13 sowie einen Mähdrescher mit einem derartigen Schrägförderer gemäß dem Patentanspruch 14.

Es sind seit langem Mähdrescher bekannt, um das Ernten von Erntegut wie z.B. von Getreide zu erleichtern. Mittels eines Mähdreschers soll das Getreide auf dem Feld gemäht sowie ausgedroschen werden, um die Getreidekörner vom Stroh zu trennen. Mittels einer Haspel werden die Halme des Getreides erfasst, durch horizontal in Bodennähe angeordnete Messerbalken abgeschnitten und über eine dahinter angeordnete Einzugsschnecke einem Schrägförderer zugeführt, welcher die Halme dann in das Innere des Mähdreschers befördert, um dort weiter verarbeitet zu werden. Der Bereich des Schrägförderers kann als Einzugskanal oder als Schacht des Mähdreschers bezeichnet werden.

Der Schrägförderer weist üblicherweise wenigstens zwei parallel zueinander verlaufende endlos geschlossene Zugmittel auf, welche in der Querrichtung durch mehrere Mitnehmerleisten immer paarweise miteinander verbunden sind. Die Mitnehmerleisten sind in der Förderrichtung, in der Längsrichtung bzw. in der endlosgeschlossenen Richtung gleichmäßig zueinander beabstandet angeordnet. Die Mitnehmerleisten können das abgeschnittene Erntegut von oben an die Innenseite des unteren Schachtbodens drücken und hierdurch schräg nach oben in das Innere des Mähdreschers zu dessen Dreschvorrichtung hin befördern.

Es ist bekannt, Stahlketten als Zugmittel in Kombination mit entsprechenden Ritzeln der Zahn- bzw. Kettenräder zu verwenden. Stahlketten sind jedoch vergleichsweise schwer, was das Gewicht des Mähdreschers als Ganzes erhöhen kann. Auch können entsprechend leistungsstarke Antriebe erforderlich sein, um die schweren Stahlketten des Schrägförderers anzutreiben, was den Energieverbrauch des Mähdreschers erhöhen sowie das Gewicht des Mähdreschers weiter steigern kann. Auch können Stahlketten vergleichsweise laute Geräusche im Betrieb verursachen.

Ferner können die Schmierstoffe wie z.B. Öl, welche zur Verwendung von Stahlketten erforderlich sind, das Erntegut verschmutzen sowie Sand und dergleichen anhaften lassen, was aufgrund des entstehenden tribologischen Systems den Verschleiß der Stahlketten erhöhen und hierdurch deren Lebensdauer reduzieren kann. Dies kann auch zu einem Längen der Stahlketten, d.h. zu einer Zunahme der Erstreckung der Stahlketten in der Längsrichtung, führen, so dass einzelne Zähne der Stahlketten an den Zahn- bzw. Kettenrädern überspringen können. Diese Sprünge können die Antriebswirkung reduzieren sowie zusätzliche sprungartige Belastungen für die Stahlketten bedeuten, was deren Lebensdauer weiter reduzieren kann. Eine zu stark gelängte Stahlkette kann dessen Austausch erforderlich machen, was zu zusätzlichen Kosten an Material und Zeit führen kann. Auch kann ein Austausch auf dem Erntefeld sehr umständlich bis nur bedingt möglich sein.

Alternativ ist es bekannt, Riemen aus Gummi als Zugträger zu verwenden. Üblicherweise werden Zahnriemen in Kombination mit entsprechenden Zahnrädern bzw. Zahnscheiben verwendet. Dies kann die o.g. Nachteile der Stahlketten vermeiden oder zumindest reduzieren. Jedoch kann ein Gummiriemen an sich keine hohen Kräfte in der Förderrichtung übertragen. Daher kommen Gummiriemen bei Schrägförderern von Mähdreschern bisher lediglich mit eingebetteten Gewebelagen zum Einsatz, so dass die Kräfte in der Förderrichtung durch die Gewebelagen als Zugträger übertragen werden können. Jedoch können auch in diesem Fall Längungen des Gummiriemens in der Förderrichtung auftreten, welche nachteiligerweise zu den o.g. Sprüngen an den Zahnrädern bzw. an den Zahnscheiben führen können. Dies gilt insbesondere für Gummiriemen, welche relativ hohen Beanspruchungen unterliegen.

Die DE 10 2009 036 104 A1 betrifft einen Schrägförderer für Mähdrescher mit mindestens zwei parallel zueinander verlaufenden, endlosen Zugmitteln, die mit Befestigungsmitteln für sie verbindende Mitnehmerleisten ausgestattet sind. Um einen Riemen als Zugmittel zur Verfügung zu stellen, der eine ausreichende Dauerzugfestigkeit für den Einsatz in einem Schrägförderer für Mähdrescher aufweist, sind die Zugmittel endlos gewickelte Nockenriemen aus gewebelagenverstärktem vernetztem Polymer hergestellt.

Nachteilig ist bei dem Zugmittel der DE 10 2009 036 104 A1, dass ein Riemen aus gewebelagenverstärktem vernetztem Polymer bei der Übertragung von Kräften in der Förderrichtung begrenzt ist. Mit anderen Worten ist die Leistungsübertragung sehr eingeschränkt.

Eine Aufgabe der vorliegenden Erfindung ist es, ein Zugmittel für einen Schrägförderer eines Mähdreschers der eingangs beschriebenen Art bereit zu stellen, welcher höhere Kräfte bzw. höhere Leistungen in der Förderrichtung übertragen kann als bekannte Zugmittel. Alternativ oder zusätzlich soll ein Längen des Zugmittels in der Förderrichtung im Betrieb vermieden oder zumindest reduziert werden. Zumindest soll eine Alternative zu bekannten derartigen Zugmitteln bereitgestellt werden.

Die Aufgabe wird erfindungsgemäß durch ein Zugmittel mit den Merkmalen gemäß Patentanspruch 1, durch einen Schrägförderer mit den Merkmalen gemäß Patentanspruch 13 sowie durch einen Mähdrescher mit den Merkmalen gemäß Patentanspruchs 14 gelöst. Vorteilhafte Weiterbildungen sind in den Unteransprüchen beschrieben.

Somit betrifft die vorliegende Erfindung ein Zugmittel, vorzugsweise einen Riemen, für einen Schrägförderer eines Mähdreschers, mit einem Zugmittelkörper, welcher sich im Wesentlichen in der Längsrichtung des Riemens erstreckt sowie endlos geschlossen ist oder endlos schließbar ausgebildet ist. Dabei kann das Zugmittel sowohl endlos geschlossen einstückig hergestellt oder offen herstellt und dann geschlossen werden.

Das Zugmittel ist dadurch gekennzeichnet, dass in den Zugmittelkörper wenigstens ein Zugstrang eingebettet ist, welcher in der Längsrichtung verläuft und vom Zugmittelkörper umschlossen wird. Unter einem Zugstrang wird ein sich linienartig über eine gewisse Länge erstreckender Körper verstanden, welcher in seiner linienartigen Erstreckungsrichtung Zugkräfte übertragen kann. Der Zugstrang kann auch als Zugseil bezeichnet werden. Der Zugstrang kann aus einzelnen Fasern bestehen oder auch einstückig ausgebildet sein. In jedem Fall ist der Zugstrang ausgebildet, in der Längsrichtung die Zugkräfte, welche im Betrieb des Schrägförderers auftreten können, linienartig zu übertragen. Für den Zugstrang kann jegliches Material sowie jegliche Geometrie verwendet werden, welche geeignet sind, für den jeweiligen Anwendungsfall dies zu erreichen.

Der vorliegenden Erfindung liegt dabei die Erkenntnis zugrunde, dass ein Zugstrang im Vergleich zu einer Kette oder zu einem gewebehaltigen Körper eine deutlich geringere Längung aufweisen kann. Dies ist gegenüber einer Kette wie z.B. gegenüber einer Stahlkette dadurch begründet, dass eine Kette einzelne Glieder aufweist, welche im Betrieb gegeneinander bewegt werden und somit u.a. durch die hierbei entstehende Reibung derart verschleißen können, dass eine Längung in der länglichen Erstreckungsrichtung des Zugmittels auftreten kann. Dies ist gegenüber einem gewebehaltigen Körper wie z.B. einem gewebelagenverstärkten vernetzten Polymer dadurch begründet, dass ein Gewebe naturgemäß eine gewisse Dehnbarkeit in seiner flächigen Erstreckung aufweist, welche zu einer Längung in der länglichen Erstreckungsrichtung des Zugmittels führen kann.

Somit können erfindungsgemäß die bei einem Schrägförderer auftretenden Zugkräfte mittels des Zugstrangs übertragen werden, ohne dass hierbei eine Längung auftreten kann bzw. so dass die Längung ausreichend gering ausfällt, um ein Springen des Zugmittels zu vermeiden. Mit anderen Worten kann die mögliche Leistungsübertragung erhöht werden. Gemäß einem Aspekt der vorliegenden Erfindung ist eine Mehrzahl von Zugsträngen in dem Zugmittelkörper eingebettet, wobei die Zugstränge in der Querrichtung zueinander beabstandet angeordnet sind. Hierdurch kann die Wirkung der Zugstränge vervielfacht werden. Auch kann deren Wirkung senkrecht zur länglichen Erstreckungsrichtung des Zugmittels gleichmäßiger über das Zugmittel verteilt werden.

Gemäß einem weiteren Aspekt der vorliegenden Erfindung weisen wenigstens zwei Zugstränge in der Querrichtung wenigstens einen zugstrangfreien Bereich zwischen sich auf. Hierdurch können Bereiche des Zugmittels geschaffen werden, um beliebige weitere Elemente mit dem Zugmittel durch dessen Zugmittelkörper hindurch bzw. hinein zu verbinden, ohne die Zugstränge zu beschädigen.

Gemäß einem weiteren Aspekt der vorliegenden Erfindung weist der Zugmittelkörper in wenigstens einem zugstrangfreien Bereich wenigstens eine Durchgangsöffnung auf, welche sich in der vertikalen Richtung durch den Zugmittelkörper hindurch erstreckt. Auf diese Art und Weise kann eine Befestigung eines anderen Elements an dieser Stelle durch den Zugmittelkörper hindurch erfolgen, ohne hierfür den Zugmittelkörper bearbeiten zu müssen.

Gemäß einem weiteren Aspekt der vorliegenden Erfindung weist der Zugmittelkörper Polyurethan auf, vorzugsweise besteht hieraus. Dies ermöglicht die Nutzung der Materialeigenschaften des Polyurethans bei einem derartigen Zugmittel. Auch kann hierdurch die Herstellung des Zugmittels vereinfacht werden, da das Zugmittel mittels Extrusion anstelle von Vulkanisation wie bei einem Zugmittelkörper aus Gummi hergestellt werden kann. Dies kann auch zu Kostenersparnissen führen. Ferner kann das Umschließen des Zugstrangs durch das Material des Zugmittelkörpers auf diese Art und Weise vergleichsweise einfach und bzw. oder prozesssicher erfolgen.

Gemäß einem weiteren Aspekt der vorliegenden Erfindung weist der Zugstrang als Material Stahl, Polyester, Aramid, Glasfaser und bzw. oder Carbon auf, vorzugsweise besteht aus Stahl, Polyester, Aramid, Glasfaser oder Carbon. Alle diese Materialien weisen eine vergleichsweise hohe Zugfestigkeit auf, so dass die gewünschte möglichst geringe Längung in der länglichen Erstreckungsrichtung durch Verwendung eines dieser Materialien bzw. durch Verwendung einer Kombination dieser Materialien miteinander oder mit anderen Materialien erreicht werden kann.

Gemäß einem weiteren Aspekt der vorliegenden Erfindung weist das Zugmittel eine Mehrzahl von Zähnen auf, welche sich jeweils in der vertikalen Richtung zur selben Seite des Zugmittelkörpers sowie in der Querrichtung erstrecken und in der Längsrichtung zueinander beabstandet sind. Hierdurch kann eine Profilierung des Zugmittels erreicht werden, um mit den Zahnscheiben des Antriebs des Schrägförderer zusammenwirken und die Antriebskräfte übertragen zu können.

Gemäß einem weiteren Aspekt der vorliegenden Erfindung sind wenigstens zwei Zähne in der Längsrichtung durch einen zahnfreien Bereich zueinander beabstandet, wobei die Breite des zahnfreien Bereichs der Breite eines Zahns entspricht. Auf diese Art und Weise kann eine Mitnehmerleiste an dieser Stelle des zahnfreien Bereichs angeordnet werden, um das Zugmittel mit einem weiteren Zugmittel in der Querrichtung zu verbinden. Gleichzeitig kann der ausgelassene Zahn durch die Mitnehmerleiste ersetzt werden.

Gemäß einem weiteren Aspekt der vorliegenden Erfindung weist das Zugmittel eine Mitnehmerleiste auf, welche feststehend mit dem Zugmittelkörper verbunden ist und sich im Wesentlichen in der Querrichtung erstreckt, wobei die Mitnehmerleiste mittels wenigstens eines Befestigungsmittels, vorzugsweise mittels eines Paares von Befestigungsmitteln, mit einem inneren Halterungselement verbunden ist, welches sich im Wesentlichen parallel zur Mitnehmerleiste in der Querrichtung erstreckt, wobei die Mitnehmerleiste und das innere Halterungselement den Zugmittelkörper in der vertikalen Richtung beidseitig zumindest abschnittweise um greifen, wobei die Mitnehmerleiste und bzw. oder das Befestigungsmittel und bzw. oder das innere Halterungselement in einer Aussparung des Zugmittelkörpers angeordnet sind. Hierdurch kann ein formschlüssiger Halt des entsprechenden Halterungselements, Befestigungsmittels bzw. inneren Halterungselements gegenüber dem Zugmittelkörper erreicht werden, so dass die Mitnehmerleiste einfach, schnell und bzw. oder mit einer vergleichsweise hohen Belastbarkeit gegenüber Kräften in der Längsrichtung mit dem Zugmittelkörper verbunden werden kann. Hierbei ein Paar von Befestigungsmitteln zu verwenden, welche vorzugsweise in der Querrichtung zueinander beabstandet und in der Längsrichtung parallel zueinander angeordnet sind, kann ein Umgreifen begünstigen und den Halt verbessern. Auch kann eine ungleichmäßige Kraftübertragung vermieden werden.

Gemäß einem weiteren Aspekt der vorliegenden Erfindung weist das Zugmittel in der Längsrichtung zwei Zugmittelenden auf, mittels derer das Zugmittel endlos geschlossen ist oder endlos schließbar ausgebildet ist, wobei die beiden Enden sich in der Querrichtung und bzw. oder in der vertikalen Richtung überlappen oder ausgebildet sind, sich in der Querrichtung und bzw. oder in der vertikalen Richtung zu überlappen. Durch das Überlappen der Zugmittelenden kann eine Kontaktfläche geschaffen werden, welche durch geeignete Anpresskräfte einer entsprechenden mechanischen Verbindung für einen kraftschlüssigen Halt der beiden Zugmittelenden verwendet werden kann. Zusätzlich oder alternativ können die Zugmittelenden auch gemeinsam von demselben Halterungselement, Befestigungsmittel bzw. inneren Halterungselement umgriffen und formschlüssig gehalten werden, so dass hierdurch ein sicherer Zusammenhalt der beiden Zugmittelenden erreicht werden kann.

Gemäß einem weiteren Aspekt der vorliegenden Erfindung weist das Zugmittel wenigstens ein äußeres Halterungselement auf, welches mittels wenigstens eines Befestigungsmittels, vorzugsweise mittels eines Paares von Befestigungsmitteln, mit einem inneren Halterungselement verbunden ist, welches sich im Wesentlichen parallel zum äußeren Halterungselement in der Querrichtung erstreckt, wobei das äußere Halterungselement und das innere Halterungselement den Zugmittelkörper in der vertikalen Richtung beidseitig zumindest abschnittweise umgreifen, wobei das äußere Halterungselement und bzw. oder das Befestigungsmittel und bzw. oder das innere Halterungselement in einer Aussparung des Zugmittelkörpers angeordnet sind. Hierdurch können die zuvor bereits beschriebenen Eigenschaften einer derartigen Verbindung nicht nur bei einer Mitnehmerleiste, sondern auch zum Verbinden zweier Zugmittelenden in vergleichbarer Art und Weise angewendet werden. Gemäß einem weiteren Aspekt der vorliegenden Erfindung ist die Aussparung in einem Zahn angeordnet. Hierdurch kann die erforderliche Tiefe in das Material des Zugmittelkörpers von dem Zahn bereitgestellt werden, um eine ausreichend tiefe Aussparung zu schaffen, die einen ausreichenden formschlüssigen Halt gewährleisten kann. Dies kann ohne eine Verringerung des Zugmittelkörpers an den zahnfreien Bereichen erfolgen, welche sich als Schwächung auf das Zugmittel auswirken könnte.

Die vorliegende Erfindung betrifft auch einen Schrägförderer für einen Mähdrescher mit einem Zugmittel wie zuvor beschrieben. Auf diese Art und Weise kann das erfindungsgemäße Zugmittel mit seinen Eigenschaften und Vorteilen auf einen Schrägförderer für einen Mähdrescher angewendet werden.

Die vorliegende Erfindung betrifft auch einen Mähdrescher mit einem Schrägförderer wie zuvor beschrieben. Auf diese Art und Weise kann der erfindungsgemäße Schrägförderer mit seinen Eigenschaften und Vorteilen auf einen Mähdrescher angewendet werden.

Mehrere Ausführungsbeispiele und weitere Vorteile der Erfindung werden nachstehend im Zusammenhang mit den folgenden Figuren erläutert. Darin zeigt:
- Fig. 1: eine perspektivische schematische Darstellung eines erfindungsgemäßen Mähdreschers;
- Fig. 2: eine schematische Schnittdarstellung eines vorderen Teils des Mähdreschers der Fig. 1;
- Fig. 3: eine perspektivische schematische Darstellung eines erfindungsgemäßen Schrägförderers;
- Fig. 4: eine perspektivische schematische Schnittdarstellung eines erfindungsgemäßen Zugmittels gemäß einem ersten Ausführungsbeispiel;
- Fig. 5: eine weitere perspektivische schematische Schnittdarstellung des erfindungsgemäßen Zugmittels gemäß dem ersten Ausführungsbeispiel der Fig. 4;
- Fig. 6: eine perspektivische schematische Schnittdarstellung eines erfindungsgemäßen Zugmittels gemäß einem zweiten Ausführungsbeispiel; und
- Fig. 7: eine weitere perspektivische schematische Schnittdarstellung des erfindungsgemäßen Zugmittels gemäß dem zweiten Ausführungsbeispiel der Fig. 6.

Die Beschreibung der o.g. Figuren erfolgt in kartesischen Koordinaten mit einer Längsrichtung X, einer zur Längsrichtung X senkrecht ausgerichteten Querrichtung Y sowie einer sowohl zur Längsrichtung X als auch zur Querrichtung Y senkrecht ausgerichteten vertikalen Richtung Z. Die Längsrichtung X kann auch als Tiefe X, die Querrichtung Y auch als Breite Y und die vertikale Richtung Z auch als Höhe Z bezeichnet werden.

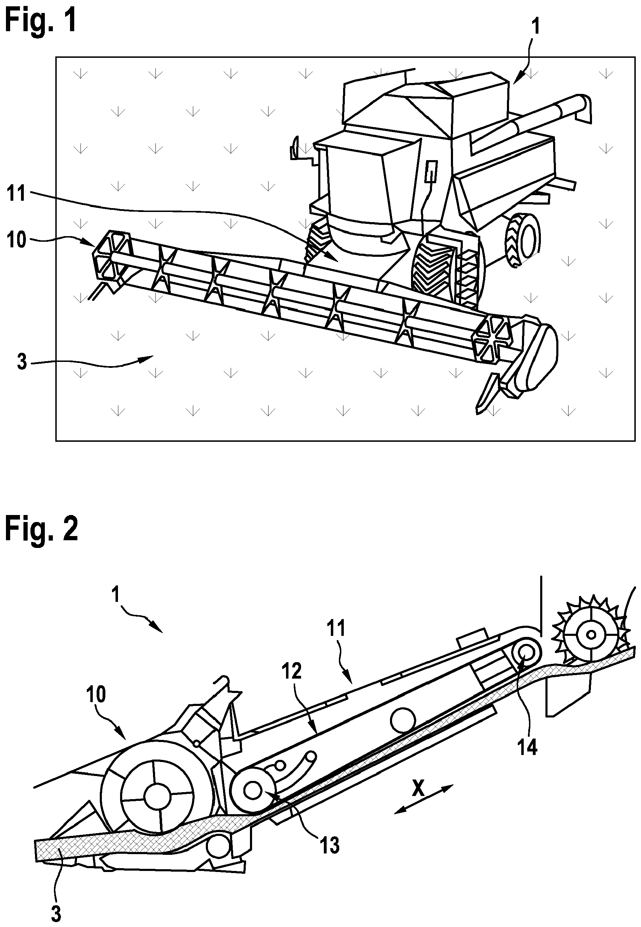

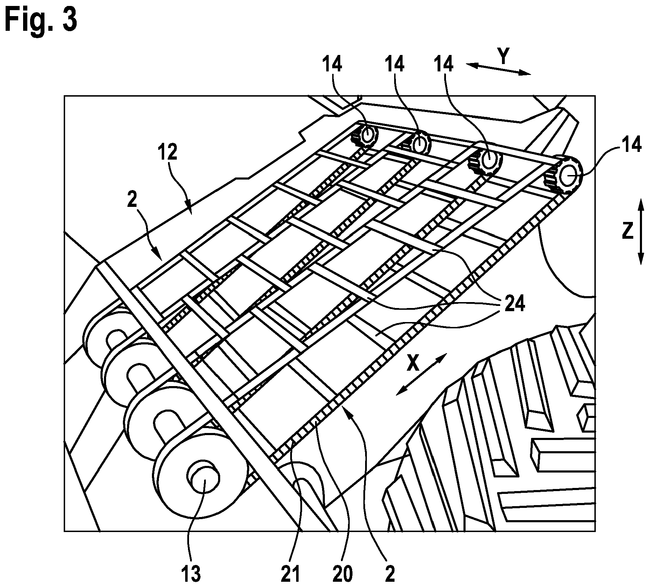

Fig. 1 zeigt eine perspektivische schematische Darstellung eines erfindungsgemäßen Mähdreschers 1. Fig. 2 zeigt eine schematische Schnittdarstellung eines vorderen Teils des Mähdreschers 1 der Fig. 1. Fig. 3 zeigt eine perspektivische schematische Darstellung eines erfindungsgemäßen Schrägförderers 12.

Der Mähdrescher 1 erntet in der Darstellung der Fig. 1 gerade ein Erntegut 3 in Form von Getreide 3 von einem Getreidefeld. Der Mähdrescher 1 weist in Fahrtrichtung an seinem vorderen Ende eine Haspel 10 auf, um das Getreide 3 bzw. dessen Halme einem Einzugskanal 11 zuzuführen, siehe Fig. 2. Der Einzugskanal 11 kann auch als Schacht 11 bezeichnet werden. In dem Einzugskanal 11 ist ein Schrägförderer 12 angeordnet, welcher sich im Wesentlichen in seiner Längsrichtung X erstreckt, siehe Fig. 2 und 3. Der Schrägförderer 12 verläuft um eine Antriebsrolle 13 und um eine Umlenkrolle 14 herum, siehe Fig. 2 und 3.

Der Schrägförderer 12 weist mehrere Zugmittel 2 in Form von Riemen 2 auf, welche jeweils endlos geschlossen und parallel zueinander angeordnet sind. Die Riemen 2 verlaufen im Wesentlichen in der Längsrichtung X und sind in der Querrichtung Y zueinander gleich beabstandet. In der Darstellung der Fig. 2 und 3 werden vier Riemen 2 verwendet. Die Riemen 2 weisen jeweils einen Zugmittelkörper 20 auf, welcher im Wesentlichen aus Polyurethan besteht. Die in den Darstellungen der Fig. 2 und 3 nach innen gerichteten Seiten der Riemen 2 weisen jeweils eine Mehrzahl von Zähnen 21 auf, welche sich jeweils in der Querrichtung Y erstrecken und grundsätzlich in der Längsrichtung X zueinander gleichmäßig beabstandet angeordnet sind.

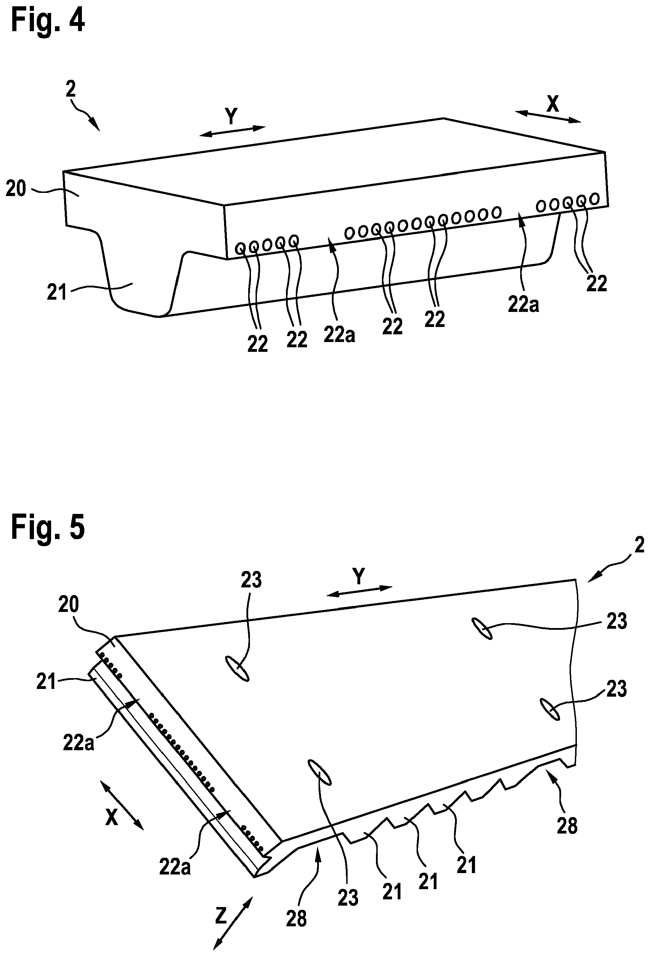

Fig. 4 zeigt eine perspektivische schematische Schnittdarstellung eines erfindungsgemäßen Zugmittels 2 gemäß einem ersten Ausführungsbeispiel. Fig. 5 zeigt eine weitere perspektivische schematische Schnittdarstellung des erfindungsgemäßen Zugmittels 2 gemäß dem ersten Ausführungsbeispiel der Fig. 4.

Um die Übertragung von Zugkräften in der Längsrichtung X zu verbessern weist der erfindungsgemäße Riemen 2 gemäß dem ersten Ausführungsbeispiel eine Mehrzahl von Zugsträngen 22 in Form von Zugseilen 22 auf, welche sich jeweils in der Längsrichtung X erstrecken und in der Querrichtung Y parallel zueinander angeordnet sind. Als Zugstränge 22 bzw. Zugseile 22 können z.B. Stahlseile 22, Polyester-Seile 22, Aramid-Seile 22 oder auch Carbon-Seile 22 verwendet werden. Hierdurch kann ein Längen der Zugstränge 22 und damit ein Längen des Riemens 2 in der Längsrichtung X als seine längliche Erstreckungsrichtung vermieden oder zumindest ausreichend reduziert bzw. verzögert werden, so dass ein Springen des Riemens 2 bzw. dessen Zähne 21 an der Antriebsrolle 13 und bzw. oder an der Umlenkrolle 14 vermieden bzw. zumindest reduziert werden kann.

Wie in der Zusammenschau der Fig. 4 und 5 zu erkennen ist, weist der Riemen 2 gemäß dem ersten Ausführungsbeispiel in der Querrichtung Y zwei Bereich 22a auf, welche zugstrangfrei sind. Mit anderen Worten verlaufen in den zugstrangfreien Bereichen 22a keine Zugstränge 22. Auf diese Art und Weise können die zugstrangfreien Bereiche 22a genutzt werden, dort Durchgangsöffnungen 22 in der vertikalen Richtung Z durch den Zugmittelkörper 20 hindurch vorzusehen, durch welche dann Befestigungsmittel 25 wie z.B. Schrauben 25 geführt werden können, um z.B. Mitnehmerleisten 24 an dem Zugmittelkörper 20 feststehend zu montieren, vgl. z.B. Fig. 3. Die Durchgangsöffnungen 22 sind dabei paarweise vorgesehen, um den Halt der Mitnehmerleiste 24 zu verbessern. Hierzu kann jeweils einer der Zähne 21 an der Stelle der Durchgangsöffnungen 22 weggelassen werden, um einen zahnfreien Bereich 28 zu schaffen. Der Zahn 21 an dieser Stelle kann durch die Mitnehmerleiste 24 ersetzt werden.

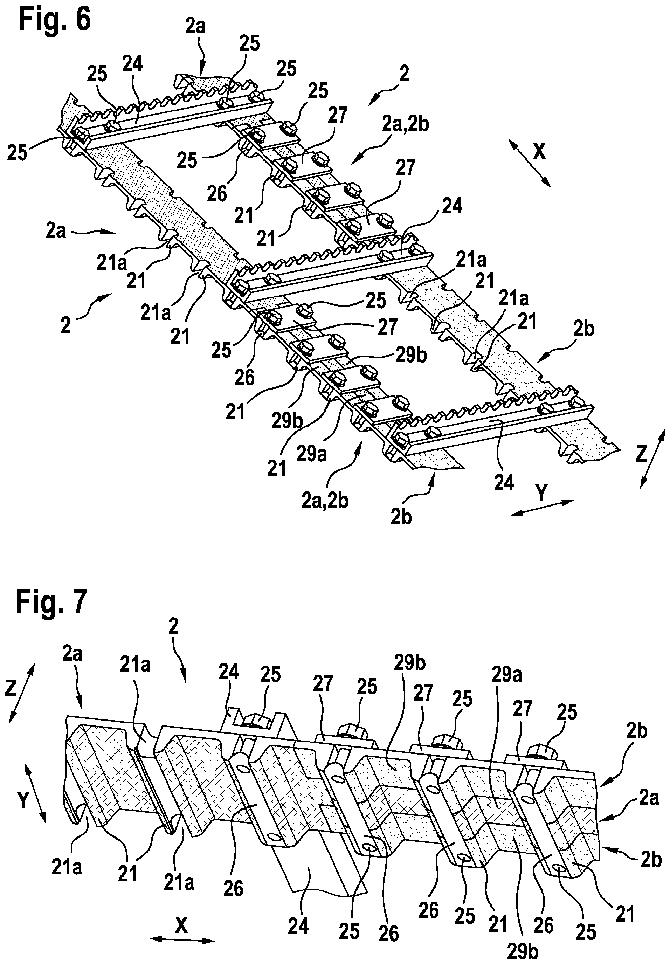

Fig. 6 zeigt eine perspektivische schematische Schnittdarstellung eines erfindungsgemäßen Zugmittels 2 gemäß einem zweiten Ausführungsbeispiel. Fig. 7 zeigt eine weitere perspektivische schematische Schnittdarstellung des erfindungsgemäßen Zugmittels 2 gemäß dem zweiten Ausführungsbeispiel der Fig. 6.

Wie bereits zuvor erwähnt, werden bei dem Schrägförderer 12 der Fig. 2 und 3 mehrere derartige Riemen 2 als Zugmittel 2 parallel zueinander angeordnet und mittels der Mitnehmerleisten 24 paarweise miteinander verbunden. Die Befestigung der Mitnehmerleisten 24 kann dabei wie bzgl. des ersten Ausführungsbeispiels eines erfindungsgemäßen Riemens 2 der Fig. 4 und 5 erfolgen.

Alternativ können die beiden beteiligten Riemen 2 auch pro Zahn 21 eine Aussparung 21a aufweisen, welche sich in der Querrichtung Y beidseitig am Zahn 21 in der vertikalen Richtung Z sowie in der Querrichtung Y durch das Material des Zahns 21 hindurch erstreckt. Die Aussparung 21a läuft somit nach außen offen etwa U-förmig um den Zahn 21 herum. Die Oberseite bzw. Außenseite des Riemenkörpers 20 weist keine Aussparung auf. Von dem in der Querrichtung Y verlaufenden Abschnitt der Aussparung 21a wird jeweils ein inneres Halterungselement 26 aufgenommen, welches aufgrund seiner im Wesentlichen länglichen Erstreckung in der Querrichtung Y auch als inneres Querelement 26 bezeichnet werden kann. Das innere Halterungselement 26 verläuft dabei parallel zur Mitnehmerleiste 24, welche jeweils senkrecht in der vertikalen Richtung Z durch zwei Befestigungsmittel 25 in Form von Schrauben 25 gegenüber einander gehalten werden. Dies kann über entsprechende Innengewinde des inneren Halterungselements 26 (nicht dargestellt) sowie Durchgangsöffnungen der Mitnehmerleiste 24 (nicht dargestellt) erfolgen. Auf diese Art und Weise kann ein sicherer Halt der Mitnehmerleiste 24 erreicht werden, ohne die Kontur der Zähne 21 gegenüber der Antriebsrolle 13 bzw. Umlenkrolle 14 merklich zu verändern.

Die Fig. 5 und 6 zeigen ferner die Möglichkeit, die erfindungsgemäßen Riemen 2 offen herzustellen und dann endlos zu schließen. Hierzu weist jeder Riemen 2 ein erstes Zugmittelende 2a bzw. Riemenende 2a und ein in der Längsrichtung X gegenüberliegendes zweites Zugmittelende 2b bzw. Riemenende 2b auf. Das zweite Riemenende 2b ist dabei jeweils mit einer in der Querrichtung Y mittig angeordneten und sich in der Querrichtung Y etwa über ein Drittel der Riemenbreite erstreckende Aussparung 29b versehen, welche geometrisch einem korrespondierenden Vorsprung 29a des ersten Riemenendes 2a entspricht. Hierdurch können die beiden Riemenenden 2a, 2b einander in der Querrichtung Y überlappend angeordnet werden. Es sind jedoch auch andere Breiten der Aussparung 29b sowie der korrespondierenden Vorsprünge 29a in der Querrichtung Y möglich wie z.B. ein Viertel, ein Halb und dergleichen.

Dann können die beiden sich überlappenden Riemenenden 2a, 2b wie zuvor für die Mitnehmerleisten 24 beschrieben gesichert und hierdurch miteinander verbunden werden, wobei anstelle der Mitnehmerleiste 24 jeweils ein äußeres Halterungselement 27 verwendet wird, welches auch als äußeres Querelement 27 bezeichnet werden kann. Mehrere derartige formschlüssig sowie kraftschlüssig wirkende mechanische Verbindungen werden in der Längsrichtung X über den gesamten Bereich der Überlappung angeordnet, um deren Wirkung zu erhöhen und eine ausreichend haltbare Verbindung zu schaffen, welche die Kräfte bzw. Leistungen des Schrägförderers 12 in der Längsrichtung X übertragen kann.

### Bezugszeichenliste (Teil der Beschreibung)

- X: Längsrichtung; Tiefe
- Y: Querrichtung; Breite
- Z: vertikale Richtung; Höhe

- 1: Mähdrescher
- 10: Haspel
- 11: Einzugskanal; Schacht
- 12: Schrägförderer
- 13: Antriebsrolle
- 14: Umlenkrolle

- 2: Zugmittel; Riemen
- 2a: erstes Zugmittelende; erstes Riemenende
- 2b: zweites Zugmittelende; zweites Riemenende
- 20: Zugmittelkörper; Riemenkörper
- 21: Zähne
- 21a: Aussparungen des Zugmittelkörpers 20 bzw. der Zähne 21
- 22: Zugstrang; Zugträgerseil; Stahlseile; Polyester-Seile; Aramid-Seile; Carbon-Seile
- 22a: zugstrangfreie Bereiche
- 23: Durchgangsöffnungen
- 24: Mitnehmerleisten
- 25: Befestigungsmittel; Schrauben
- 26: innere Halterungselemente; innere Querelemente
- 27: äußere Halterungselemente; äußere Querelemente
- 28: zahnfreie Bereiche
- 29a: Vorsprung des ersten Zugmittelendes 2a
- 29b: Aussparung des zweiten Zugmittelendes 2b

- 3: Erntegut; Getreide

## Patentansprüche

1. Zugmittel (2), vorzugsweise Riemen (2), für einen Schrägförderer (12) eines Mähdreschers (1),
mit einem Zugmittelkörper (20), welches sich im Wesentlichen in der Längsrichtung (X) des Riemens (2) erstreckt sowie endlos geschlossen ist oder endlos schließbar ausgebildet ist,
**dadurch gekennzeichnet, dass**
in den Zugmittelkörper (20) wenigstens ein Zugstrang (22) eingebettet ist, welcher in der Längsrichtung (X) verläuft und vom Zugmittelkörper (20) umschlossen wird.

2. Zugmittel (2) nach Anspruch 1, **dadurch gekennzeichnet, dass** eine Mehrzahl von Zugsträngen (22) in dem Zugmittelkörper (2) eingebettet ist, wobei die Zugstränge (22) in der Querrichtung (Y) zueinander beabstandet angeordnet sind.

3. Zugmittel (2) nach Anspruch 2, **dadurch gekennzeichnet, dass** wenigstens zwei Zugstränge (22) in der Querrichtung (Y) wenigstens einen zugstrangfreien Bereich (22a) zwischen sich aufweisen.

4. Zugmittel (2) nach Anspruch 3, **dadurch gekennzeichnet, dass** der Zugmittelkörper (20) in wenigstens einem zugstrangfreien Bereich (22a) wenigstens eine Durchgangsöffnung (23) aufweist, welche sich in der vertikalen Richtung (Z) durch den Zugmittelkörper (20) hindurch erstreckt.

5. Zugmittel (2) nach einem der vorangehenden Ansprüche, **dadurch gekennzeichnet, dass**
der Zugmittelkörper (20) Polyurethan aufweist, vorzugsweise hieraus besteht.

6. Zugmittel (2) nach einem der vorangehenden Ansprüche, **dadurch gekennzeichnet, dass**
der Zugstrang (22) als Material Stahl, Polyester, Aramid, Glasfaser und/oder Carbon aufweist, vorzugsweise aus Stahl, Polyester, Aramid, Glasfaser oder Carbon besteht.

7. Zugmittel (2) nach einem der vorangehenden Ansprüche, **gekennzeichnet durch** eine Mehrzahl von Zähnen (21), welche sich jeweils in der vertikalen Richtung (Z) zur selben Seite des Zugmittelkörpers (20) sowie in der Querrichtung (Y) erstrecken und in der Längsrichtung (X) zueinander beabstandet sind.

8. Zugmittel (2) nach Anspruch 7, **dadurch gekennzeichnet, dass** wenigstens zwei Zähne (21) in der Längsrichtung (X) durch einen zahnfreien Bereich (28) zueinander beabstandet sind,
wobei die Breite des zahnfreien Bereichs (28) der Breite eines Zahns (21) entspricht.

9. Zugmittel (2) nach einem der vorangehenden Ansprüche, **gekennzeichnet durch** eine Mitnehmerleiste (24), welche feststehend mit dem Zugmittelkörper (20) verbunden ist und sich im Wesentlichen in der Querrichtung (Y) erstreckt,
wobei die Mitnehmerleiste (24) mittels wenigstens eines Befestigungsmittels (25), vorzugsweise mittels eines Paares von Befestigungsmitteln (25), mit einem inneren Halterungselement (26) verbunden ist, welches sich im Wesentlichen parallel zur Mitnehmerleiste (24) in der Querrichtung (Y) erstreckt,
wobei die Mitnehmerleiste (24) und das innere Halterungselement (26) den Zugmittelkörper (20) in der vertikalen Richtung (Z) beidseitig zumindest abschnittweise umgreifen,
wobei die Mitnehmerleiste (24) und/oder das Befestigungsmittel (25) und/oder das innere Halterungselement (26) in einer Aussparung (21a) des Zugmittelkörpers (20) angeordnet sind.

10. Zugmittel (2) nach einem der vorangehenden Ansprüche, **dadurch gekennzeichnet, dass**
das Zugmittel (2) in der Längsrichtung (X) zwei Zugmittelenden (2a, 2b) aufweist, mittels derer das Zugmittel (2) endlos geschlossen ist oder endlos schließbar ausgebildet ist,
wobei die beiden Enden (2a, 2b) sich in der Querrichtung (Y) und/oder in der vertikalen Richtung (Z) überlappen oder ausgebildet sind, sich in der Querrichtung (Y) und/oder in der vertikalen Richtung (Z) zu überlappen.

11. Zugmittel (2) nach Anspruch 10, **gekennzeichnet durch**
wenigstens ein äußeres Halterungselement (27), welches mittels wenigstens eines Befestigungsmittels (25), vorzugsweise mittels eines Paares von Befestigungsmitteln (25), mit einem inneren Halterungselement (26) verbunden ist, welches sich im Wesentlichen parallel zum äußeren Halterungselement (27) in der Querrichtung (Y) erstreckt,
wobei das äußere Halterungselement (27) und das innere Halterungselement (26) den Zugmittelkörper (20) in der vertikalen Richtung (Z) beidseitig zumindest abschnittweise umgreifen,
wobei das äußere Halterungselement (27) und/oder das Befestigungsmittel (25) und/oder das innere Halterungselement (26) in einer Aussparung (21a) des Zugmittelkörpers (20) angeordnet sind.

12. Zugmittel (2) nach Anspruch 9 oder 11, **dadurch gekennzeichnet, dass** die Aussparung (21a) in einem Zahn (21) angeordnet ist.

13. Schrägförderer (12) für einen Mähdrescher (1)
mit einem Zugmittel (2) nach einem der vorangehenden Ansprüche.

14. Mähdrescher (1)
mit einem Schrägförderer (12) nach Anspruch 13.
